# EUROPEAN PATENT APPLICATION

(11) **EP 1 617 127 A2**
(43) Date of publication of application: **18.01.2006**
(21) Application number: 05254290.9
(22) Date of filing: 08.07.2005
(51) Int. Cl.: F16M 13/02

(54) **Wall mounting support for display unit**

(30) Priority: 12.07.2004 JP 2004205205
(71) Applicant: SONY CORPORATION, Tokyo (JP)
(72) Inventor: Morita, Masafumi, c/o Sony Corporation, Tokyo (JP)
(74) Representative: Leppard, Andrew John

(57) **Abstract**

A wall mounting support for a display unit includes:
a hook unit (20) fixed to a rear of a display unit (1), having two sets of hooks and engaging sections, disposed on right and left sides of the hook unit, respectively; and a plate unit (30) fixed to a wall, having two sets of engaging shafts engaging with the hooks and tilting attachments (35L) engaging with the engaging sections, disposed on right and left sides of the plate unit (30), respectively; wherein the hook on the rear of the display unit is pivotally hung on the engaging shaft of the plate unit, and the tilting attachment (35L) is provided so as to have a predetermined space between the wall and a lower part of the rear of the display unit (1) when the tilting attachment (35L) engages with the engaging section.

## Description

The present invention relates to a wall mounting support for a display unit. Embodiments relate to a support which is suitable to fix a display to a wall, for example, for a liquid crystal display unit, a plasma display unit and the like that have a large flat thin display screen.

A display unit having a large flat thin display screen is used by placing on a floor with the use of stands or by fixing to a wall. In the latter case, in order to fix the display screen to the wall, a wall mounting support is generally disposed between the rear of the display unit and the wall. Specifically, in a wall mounting support in a related art, a hook member is protrudingly formed on a panel-like body to be fixed to a wall and is made to fitted to a mounting hole formed on the rear of a display unit body, thereby fixing the display unit to the wall surface. Alternatively, a panel-like body is divided into a panel member to be fixed to the wall surface etc. and a hook member, and both members are joined with a hinge mechanism, so that a mounting angle of a display unit to the wall surface etc. is adjustable up and down.

There is also known a wall mounting bracket for a flat display unit, which is disclosed in Japanese Patent Application Publication No. Hei 11-202778. This wall mounting bracket for a flat display unit is configured as follows. Recess portions are provided on the rear of the both side surfaces of the flat display unit, and supporting shafts and mounting screw holes are provided on the side surfaces of the recess portions. On an engaging plate arranged so as to correspond to the side surfaces of the both recess portions of the flat display unit, there are inverse L-shaped grooves into which the supporting shafts are inserted to support; and a plurality of mounting holes for angular positioning, which are arranged on a circular arc that is drawn around the supporting shaft and correspond to the mounting screw holes of the flat display unit. Two symmetrical and approximately L-shape wall mounting brackets are provided, which have wall mounting holes orthogonal to the engaging plate. The two wall mounting brackets for the right and left are fixed to the wall by inserting screws from the wall mounting holes to a wall, and the supporting shafts are inserted in the reverse L-shaped grooves in the right and left wall mounting brackets to determine a tilt angle. After that, the flat display unit is fixed to the wall mounting brackets by inserting screws from the angular positioning mounting holes to the mounting screw holes of the flat display unit. It is therefore possible to provide the wall mounting bracket having a tilt angle adjustment mechanism, which can fix a display unit on a wall so as not to enter a ceiling light to a field of vision of a user.

However, such wall mounting support for a display unit in the related art suffers from the following drawbacks. In general, the main purpose of purchasing such a large-screen display unit as to be wall-mounted is video viewing at homes, as a home theater. For that reason, to fulfill audio visual (AV) functions corresponding to high image quality TV broadcasts and digital versatile discs (DVDs) software of movies and so on, many externally connecting terminals are disposed at a lower part of the rear of the display unit in order to connect many connecting cables, such as a broadcast signal input cable, a video signal input cable from a video unit and a DVD unit, etc., or an audio signal output cable for output to an external speaker.

Accordingly, the wall mounting support for a display unit in the related art, in which the hook member is protrudingly formed on the panel-shaped body, is difficult to change a tilt of the display unit. For that reason, when connecting cable of added external equipment is required, it is necessary to temporarily remove the display unit from the panel-like body. Specifically, the connection of cables on the rear of the display unit has to be done before mounting the display unit to the wall. Thereafter, at the time of cable replacement and additional connection for improving system, the display unit has to be removed from the wall mounting support. Under the weight of a large display unit, this is a two-man operation. That is, an ordinary user cannot handle it solely, and it is necessary to ask a specialty store, a shop, or an engineering firm. There is also a drawback that the direction of the display screen is difficult to be changed after installation.

Additionally, in the wall mounting support bracket of a display unit disclosed in the above publication, after mounting the display unit, the tilt of the display screen can be changed by changing the screwing positions provided on the side surface of the display unit. Once the tilt angle has been set, however, a user cannot change the tilt angle of the display unit that is being mounted on the wall mounting bracket. It is therefore not easy to perform the operation of connecting a coupling cable to an external connecting terminal in response to addition of external equipment.

Embodiments of the present invention seek to provide a wall mounting support for a display unit, which is capable of setting a tilt of a screen of a display unit easily. In addition, even after mounting the display unit to a wall with the wall mounting support, a user can make a cable connection to external equipment added by himself/herself.

According to one aspect of the invention, there is provided a wall mounting support for a display unit including: a hook unit fixed to the rear of a display unit, having two sets of hooks and engaging sections, disposed on the right and left sides of the hook unit, respectively; and a plate unit fixed to a wall, having two sets of engaging shafts engaging with the hooks and tilting attachments engaging the engaging sections, disposed on the right and left sides of the plate unit, respectively, wherein the hook on the rear of the display unit is pivotally hung on the engaging shaft of the plate unit and the tilting attachment is provided so as to have a predetermined space between the wall and a lower part of the lower part of the display unit when the tilting attachment engages with the engaging section.

According to the wall mounting support for a display unit of the present invention constructed as above, the hook of the hook unit disposed on the rear of the display unit is hung on the engaging shaft of the plate unit fixed to the wall, and the display unit is pivotally hung around the engaging shaft and tilted upward at a predetermined angle by the tilting attachment. By providing the space between the wall and the lower part of the rear of the display unit, a cable connection from external equipment to an external connecting terminal is facilitated.

According to embodiments of the invention, in the above-mentioned wall mounting support for a display unit, the plate unit includes: a base plate; a first shaft disposed on the base plate; a first lever having the engaging shaft at one end, a second shaft at the approximately central portion, and a third shaft at the other end; and a second lever having one end pivotally engaging with the first shaft and the other end pivotally engaging the second shaft, wherein an attaching position of the third shaft of the first lever to the base plate can be changed.

According to the wall mounting support for a display unit of the present invention constructed as above, because the distance between the engaging shaft at the one end of the first lever and the wall is changed by changing the position to which the third shaft at the other end of the first lever is attached, the hook unit disposed on the rear of the display unit and the plate unit fixed to the wall can be connected at a lower part of the plate unit, so that the screen of the display unit can be fixed at a desirable tilt angle.

According to the wall mounting support for a display unit of embodiments of the present invention, even after mounting the display unit to a wall, a user can make a cable connection between the display unit and external equipment to be added by himself/herself and also set a tilt of a screen of a display unit easily.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Fig. 1 is an explanatory drawing of a state in which a plate unit and a hook unit according to an embodiment of the invention are separated;
Fig. 2 is a perspective view, transparently showing a display unit in the embodiment;
Fig. 3 is a perspective view of the hook unit fixed to a display unit in the embodiment;
Figs. 4A to 4D are three-side views of the hook unit in the embodiment: Fig. 4A is a plan view; Fig. 4B is a front view; Fig. 4C is a side view; and Fig. 4D is a bottom view;
Fig. 5 is a perspective view of the hook unit in the embodiment;
Figs. 6A and 6B are a front view and a side view of the plate unit fixed to a wall in the embodiment, respectively;
Fig. 7 is a perspective view of the plate unit in the embodiment;
Fig. 8 is a perspective view, showing in an enlarged main portion of the plate unit in the embodiment;
Figs. 9A to 9C are explanatory drawings of an operation of connecting the plate unit to the plate unit;
Figs. 10A to 10C are side views for explaining an operation in the embodiment: Fig. 10A shows a state of connection; Fig. 10B shows a state in the middle of pivoting; and Fig. 10C shows a state of engagement after pivoting;
Figs. 11A to 11C are side views for explaining other operation in the embodiment: Fig. 11A shows a state of connection; Fig. 11B shows a state in the middle of pivoting; and Fig. 11C shows a state of engagement after pivoting; and
Fig. 12 is a perspective view of an appearance of an example of a display unit.

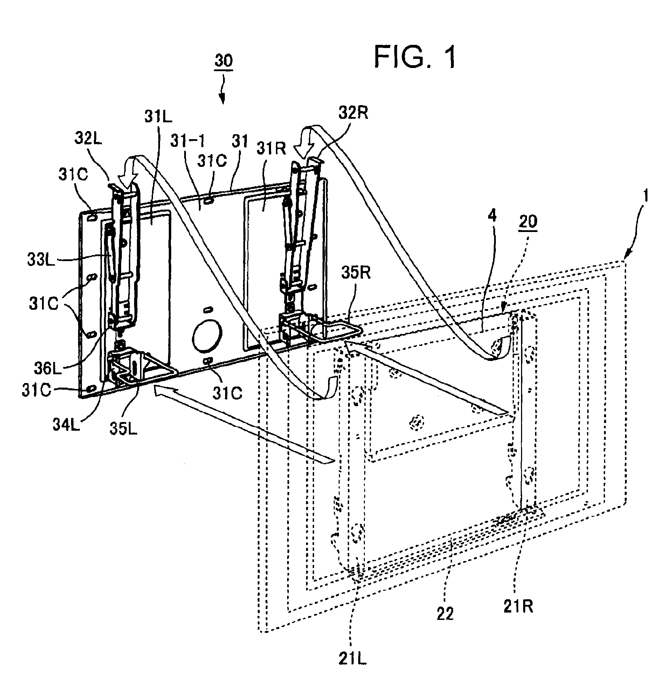

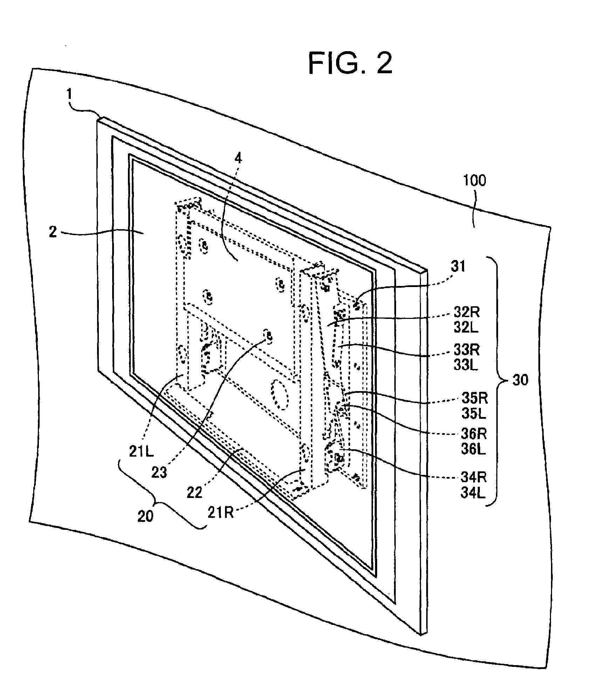

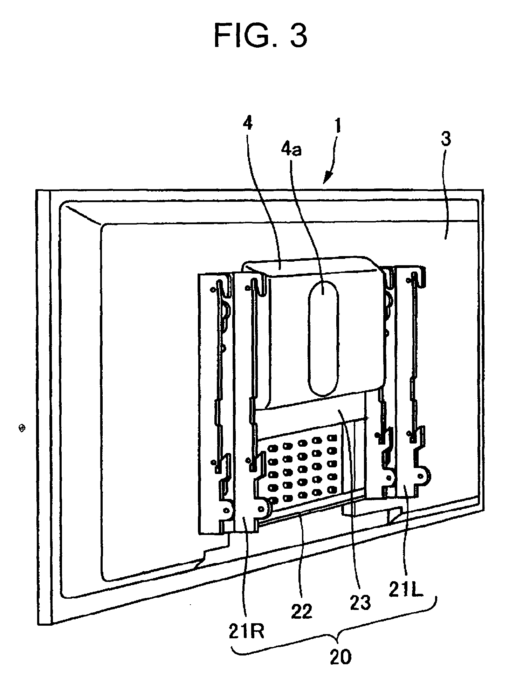

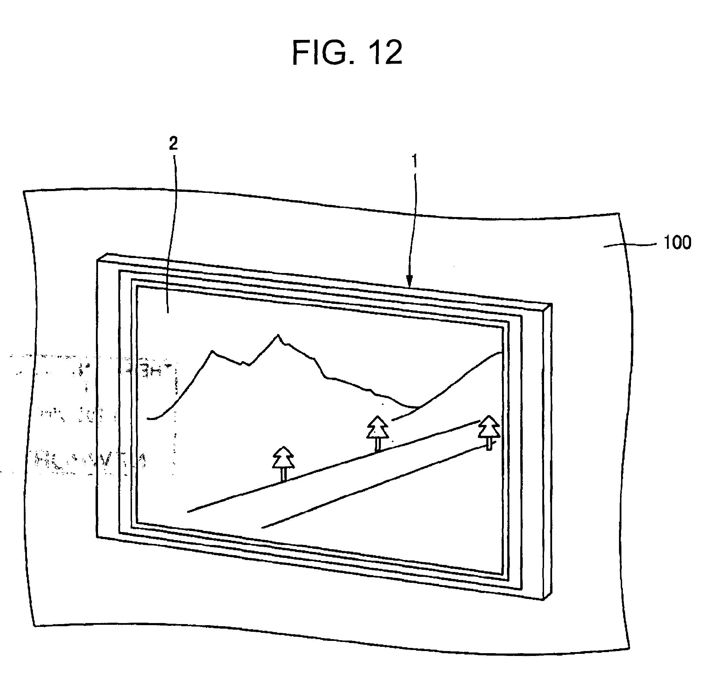

Embodiments for implementing the a wall mounting support for a display unit according to the present invention will next be described with reference to Figs. 1 to 12. Referring to Fig. 12, reference numeral 1 indicates a large display unit mounted to a wall 100, which is, for example, a plasma display unit (hereinafter referred to as a "display unit"). Video images from TV broadcasts etc., and video images through AV equipment externally connected are displayed on a display screen 2 attached to the front of this display unit 1. Fig. 2 is a perspective view showing a wall mounting support for a display unit according to the embodiment, in which the display unit 1 of Fig. 12 is transparently viewed from the display screen 2 side. As shown in Fig. 1, the wall mounting support composed of two divided structures of a hook unit 20 fixed to a rear cover 3 of the display unit 1 (see Fig. 3) and a plate unit 30 fixed to the wall 100. Specifically, Fig. 2 illustrates a state in which the hook unit 20 and the plate unit 30 are connected and fixed, and the display screen 2 of the display unit 1 is attached approximately parallel with the wall 100.

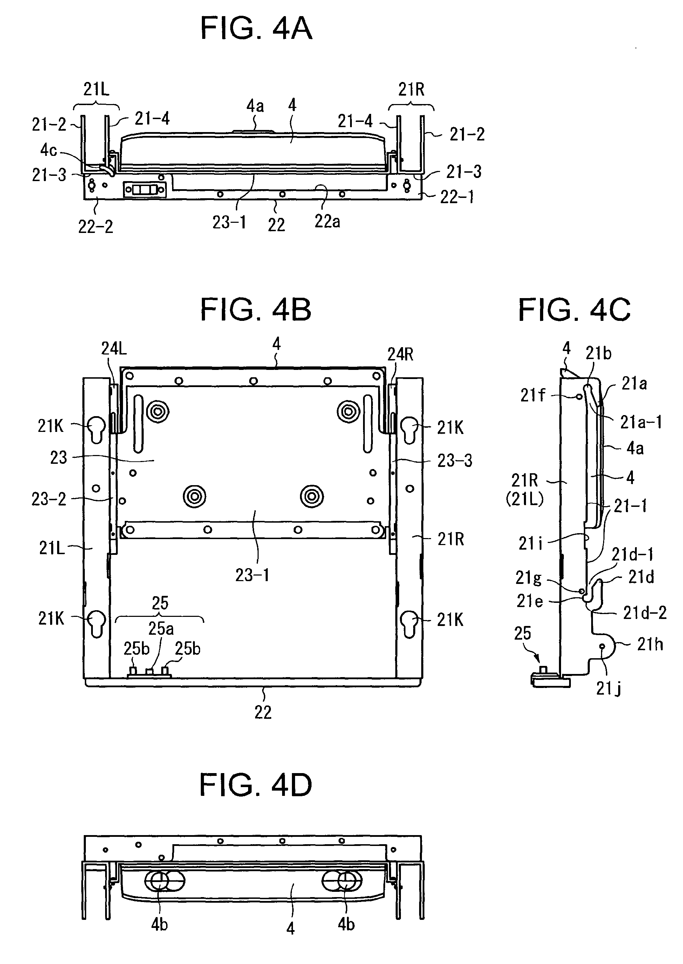

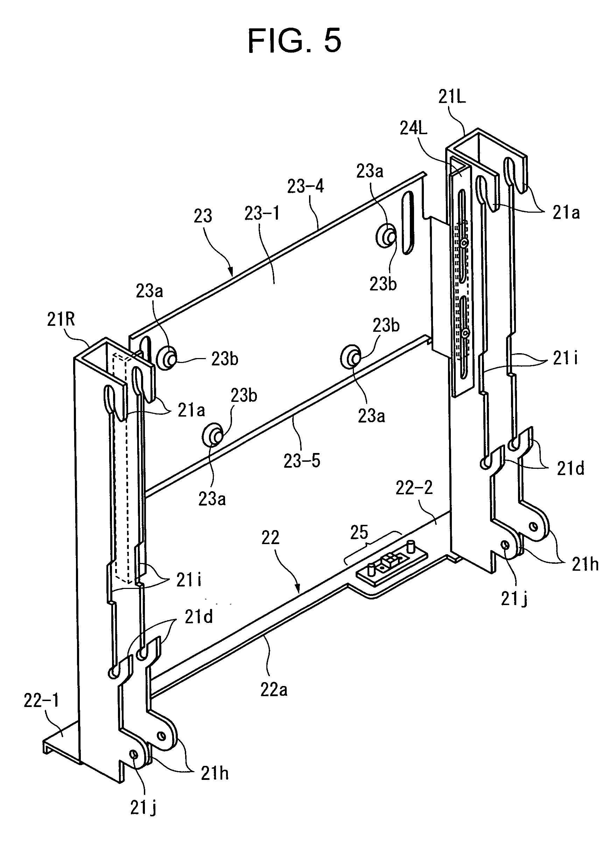

The hook unit 20 will next be described with reference to Figs. 2 to 5. The hook unit 20 has an approximately symmetry shape. As for approximately symmetry parts, only one of the right-hand and left-hand parts will be described. Common parts will be described by eliminating a symbol "R (right)" or "L (left)" from their respective reference numerals. Fig. 3 is a perspective view when the display unit 1 with the hook unit 20 integrally attached thereto is viewed from the rear. Figs. 4A to 4D illustrate the hook unit 20, which is removed from the rear cover 3 of the display unit 1 shown in Fig. 3. Fig. 5 is a perspective view of the hook unit 20. Specifically, Figs. 2 to 4D are drawings illustrating the hook unit 20 in combination with a woofer speaker unit described later. Fig. 5 is a drawing illustrating only the hook unit 20, from which the woofer speaker is removed.

Referring to Fig. 3, the hook unit 20 is disposed on the rear cover 3 of the display unit 1, and composed of two brackets 21R and 21L, a stay 22, and a support plate 23, etc. In Fig. 3, reference numeral 4 indicates a woofer speaker unit (hereinafter referred to simply as a "woofer unit"), which contains in a box enclosure a speaker for low frequency band.

As shown in Fig. 4A and Fig. 5, the bracket 21R is obtained by performing surface treatment to a metal, such as a steel plate, which is bent in U-shape. As shown in Fig. 4C and Fig. 5, a hook 21a is disposed downward in the vicinity of the upper ends of side surfaces 21-2, 21-4, and an opening 21a-1 of the hook 21a is formed on an edge 21-1 of the bracket 21, and a recess portion 21b is formed so as to cut obliquely into the edge 21-1 from the tip of the hook 21a. At this time, it is arranged so as to expand the opening width from the recess portion 21b to the opening 21a-1. Further, a recess portion 21i is formed at an approximately central lower portion of the edge 21-1 of the bracket 21R so that the edge 21-1 is slightly scraped, and a projection 21h having an approximately semicircular arc is formed in the vicinity of a lower end of the bracket 21R. At a position above the projection 21h, a lock claw 21d having an upward opening 21d-1 is formed to project from the edge 21-1, and the opening is extended from a lower end 21d-2 of the opening of the lock claw 21d so as to cut into the edge 21-1 of the bracket 21R in an approximately horizontal direction as shown in Fig. 4C, thereby forming an engaging recess portion 21e.

Further, holes 21k, 21k for attaching the rear cover 3 of the display unit 1 are formed on a side surface 21-3 of the bracket 21R shown in Figs. 4A and 4B, and a screw hole for attaching an angle 24 to be described later is drilled in a side surface 21-4. The side surface 21-3 is extended and bent at the lower end of the bracket 21R so as to be fixed to the stay 22. Further, a screw hole 21f is formed near the hook 21a, a screw hole 21g is formed near the lock claw 21d, and a screw hole 21j is formed at nearly the center of the projection 21h. The bracket 21L is manufactured symmetrically with the bracket 21R, as shown in Figs. 4A to Fig. 5.

The angles 24R and 24L are obtained by performing surface treatment to a metal, such as a steel plate, which is bent in L-shape. One surface of the respective angles is provided with a hole through which a screw is inserted to have engagement with the bracket and the other surface is provided with a long hole through which a screw is inserted to have engagement with a support plate 23 to be described later. The angle 24R and the angle 24L are manufactured as symmetrical parts.

The stay 22 is obtained by performing surface treatment to a metal, such as a steel plate, which is bent in L-shape, as shown in Fig. 4A to Fig. 5. Specifically, its both ends 22-1 and 22-2 have screw insertion holes as shown in Fig. 4A and 4D. The stay 22 is partially cut as a notch 22a located nearer the one end 22-1, and a connector unit 25 is provided at the other end 22-2. The connector unit 25 is composed of positioning pins 25b, 25b, and a connector 25a. A terminal pin (not shown) of the connector 25a is electrically connected to the above-mentioned woofer unit 4. When the hook unit 20 integrally incorporating the woofer unit 4 is fixed to the rear cover 3 of the display unit 1, the connector 25a can be fit in the corresponding speaker terminal of the display unit 1.

The support plate 23 is obtained by pressing and bending an approximately rectangular metal, such as a steel plate, followed by being subjected to surface treatment. As shown in Fig. 4B and Fig. 5, two corners of the upper part of the steel plate, which is laterally long, are notched large, and the two corners of the lower part are notched small, resulting in forming a large U-shape. Thereafter, both of the right and left end sides are further bent to form outwardly extending edges 23-2 and 23-3, and screw holes are provided thereon. The upper and lower edges of the support plate 23 are thinly bent to form bent portions 23-4 and 23-5 with respect to a surface 23-1 on the same side as the edges 23-2 and 23-3. Further, on the surface 23-1 of the support plate 23, as shown in Fig. 5, four cone-shaped recess portions 23a, 23a, ..., are formed to protrude from the same surface where the bent portions 23-4 and 23-5 are formed, and these recess portions have holes 23b, 23b, ... on their bottoms, respectively.

Referring to Fig. 3 to Fig. 4D, in the woofer unit 4, a net section 4a having such a shape that two circles of the same radius are connected by a common outer tangent is di,sposed to be vertically long at nearly the center of a surface that is part of a curved surface of the approximately box enclosure. A woofer speaker, whose main range is a low frequency band, is disposed at the inside of the net section 4a. Referring to Fig. 4D, which is a bottom view, two duct ports 4b, 4b are formed on the bottom of the approximately box enclosure in order to reinforce bass tone, as a bass reflex type enclosure. On the rear of the woofer unit 4, which is the opposing surface of the net section 4a, two long grooves (not shown) and four recess portions (not shown) each having a screw hole on the bottom are formed so as to correspond to the bent portions 23-4, 23-5, and the cone-shaped recess portions 23a, 23a ...of the support plate 23. Power supply wiring to the woofer speaker is pulled out to the exterior in such a manner so as not to damage the enclosure characteristic.

The hook unit 20 so constructed as mentioned above is assembled as follows. As shown in Fig. 5, first, the bracket 21R to which the angle 24R is screwed is disposed to stand on the end 22-1 of the stay 22, and the bracket 21L to which the angle 24L is screwed is disposed to stand on the other end 22-2. Then, the support plate 23 is placed between the angles 24R and the angle 24L, and screws are inserted from the long hole side of the angles 24R and 24L to screw holes formed at the edges 23-2 and 23-3 of the support plate 23, thereby fastening the angles 24R, 24L and the support plate.

The woofer unit 4 can be attached to the hook unit 20 as follows. First, a cylindrical vibration proof rubber (not shown) is disposed at the holes 23b, 23b, ... on the bottom of the cone-shape recess portions 23a, 23a, ... of the support plate 23. Then, the bent portions 23-4 and 23-5 on the upper and lower sides of the support plate 23 of the hook unit 20 shown in Fig. 5 are fit into the two long grooves formed on the rear of the woofer unit 4, and screws are inserted into the cylindrical rubber of the holes 23b, 23b, ..., for positioning and fixing. Thereafter, a power supply wiring 4c to the woofer unit 4 shown in Fig. 4A is laid in the U-shaped recess portion of the bracket 21L, and connected to the terminal pin of the connector 25a provided at the stay 22. Subsequently, by using holes 21k, 21k of the bracket 21 shown in Fig. 4B, the hook unit 20 to which the woofer unit 4 is attached is fixed to the rear cover 3 of the display unit 1, as shown in Fig. 3.

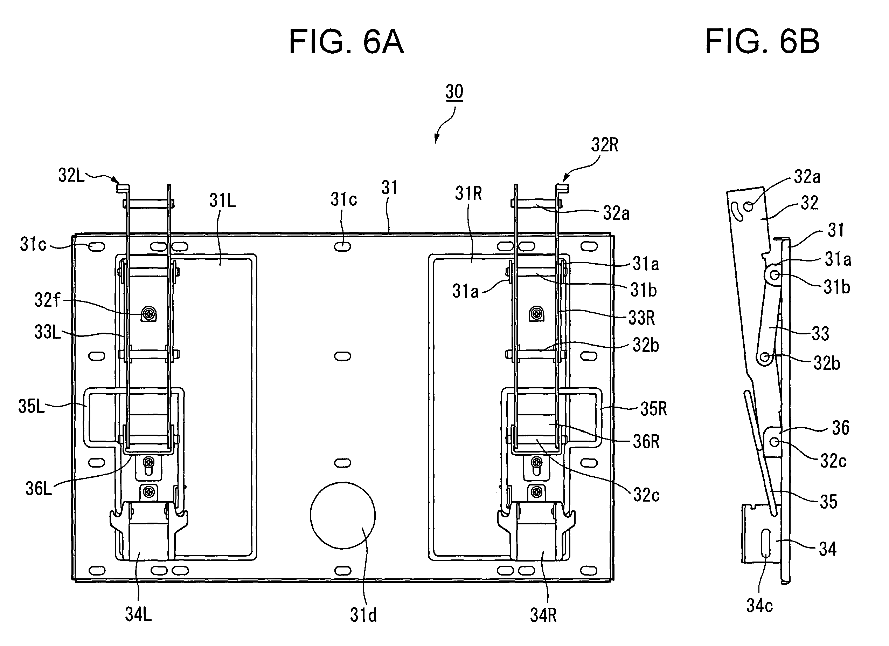

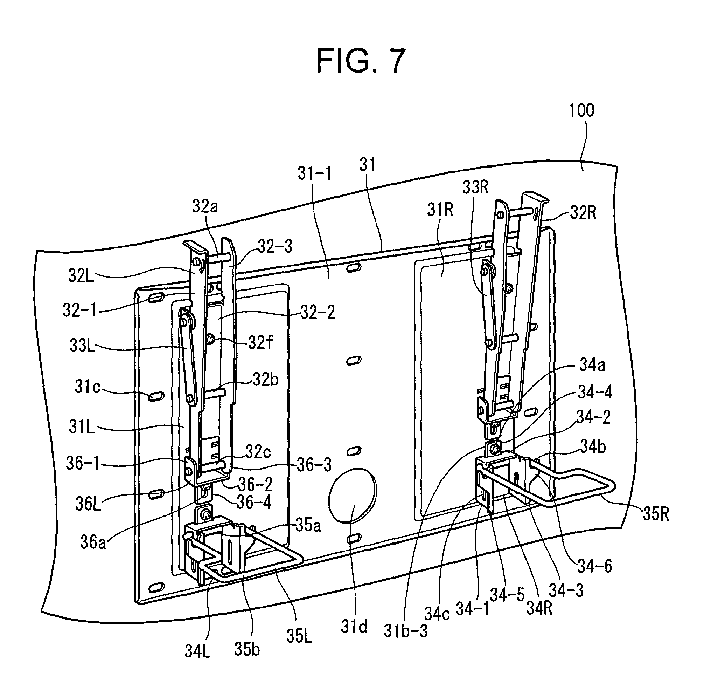

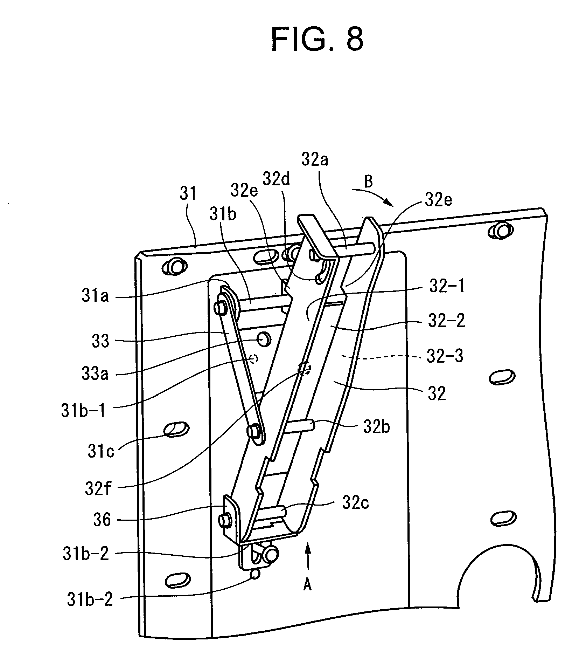

The plate unit 30 will next be described with reference to Fig. 2 and Fig. 6A to Fig. 8. The plate unit 30 has an approximately symmetry shape. As for approximately symmetry parts, only one of the right-hand and left-hand parts will be described. Common parts will be described by eliminating a symbol "R (right)" or "L (left)" from their respective reference numerals. Figs. 6A and 6B are a front view and a side view of the plate unit 30, respectively. Fig. 7 is a perspective view of the plate unit 30. Fig. 8 is a perspective view, showing an enlarged main portion of the plate unit 30 of Fig. 7. Referring to Fig. 6A to Fig. 7, the plate unit 30 includes a base plate 31 directly fixed to the wall 100, first levers 32R and 32L, second levers 33R and 33L, stoppers 34R and 34L, and tilting attachments 35R and 35L, which are disposed on the right and left of the base plate 31, respectively.

As shown in Fig. 6A to Fig. 7, the base plate 31 is obtained by bending the four sides of an approximately rectangular and relatively thick steel plate to be enforced and placed to be literally long. Swelled portions are formed on the right and left of a front surface 31-1 of the base plate 31 by forming emboss processed sections 31R and 31L shaped as an approximately vertical rectangle. The emboss processed section 31L is provided with bearings 31a, 31a, through which a first shaft 31b is inserted. A plurality of screw holes 31b-1 to 31b-3 are formed at different pitches in the vertical direction and arranged in the substantially central portion between the bearings 31a, 31a. The bearings 31a, 31a are formed by, for example, forming two symmetrical semi-circular arc kerfs on the base plate 31, and bending respective semi-circular portions so as to protrude, and then forming shaft-insertion holes therein. The screw hole 31b-1 is formed at the upper part of the emboss processed section 31L so as to correspond to screw insertion holes of first and second levers 32 and 33 to be described later. The plurality of screw holes 31b-2, 31b-2, ... is arranged in relation to the fixing position of a bearing 36L described later. The screw hole 31b-3 is disposed to fix a stopper 35L described later.

Similar to the emboss processed section 31L, the emboss processed section 31R is provided with bearings 31a, 31a, and screw holes 31b-1 and 31b-2 (see Fig. 8), and a screw hole 31-3 for fixing the stopper 35L to be described later, which are positioned symmetrically with the emboss processed section 31L with respect to the center of the base plate 31. A plurality of screw insertion holes 31c, 31c, ... for fixing the base plate 31 to the wall 100 are formed, on the base plate 31, at the peripheral area and at the central line dividing the base plate 31 into the right and the left sides. A round hole 31d located at a lower center of the base plate 31, as shown in Figs. 6 and 7, is a hole used for inserting a wire cable into the display unit 1 in the case where it is possible to drill the hole in the wall 100.

The first lever 32L is made of a metal, such as a steel plate, having three surfaces 32-1, 32-2, and 32-3. These surfaces are formed by making a reverse T-shape cut line in a shorter side of an approximately rectangular plate, followed by bending in U-shape. An engaging shaft 32a is fixed to a tip portion between the opposing surfaces 32-1 and 32-3. A second shaft 32b is pivotally disposed at nearly the center of the lever 32L, and a third shaft 32c is pivotally disposed at a lower end portion. A long hole 32d in the shape of a circular arc, whose central axis is the central axis of the engaging shaft 32, is formed on the side surface 32-1 near the engaging shaft 32a at the tip portion. A screw insertion hole 32f is formed on the surface 32-2. This tip portion is fabricated in U-shape so that the reverse T-shape cut line is opened. A corner portion 32e shown in Fig. 8 is formed at a position not to interfere with the first shaft 31b when the first lever 32L is brought into nearly close contact with the base plate 31, as shown in Fig. 7. A bearing 36L for supporting the third shaft 32c is disposed at a lower end of the first lever 32L.

In the bearing 36L, as shown in Figs. 7 and 8, holes for inserting the third shaft 31b are formed on U-shaped opposing surfaces 36-1 and 36-3, and a long hole 36a for inserting a screw is formed on a surface 36-4, which is approximately orthogonal to the surface 36-2 and extended in approximately parallel with the third shaft 31b.

The second lever 33L is obtained as follows. As shown in Figs. 7 and 8, two elongate metal plates, such as steel plates, having holes at both ends are provided at two opposing ends of a rectangular plate so as to be in approximately H-shape. Both sides of the elongate plate are then bent in U-shape. The holes on both ends of the two elongate plates are used as holes for inserting the first shaft 31b and for inserting the second shaft 32b, respectively. A screw insertion hole 33a is formed at the inner rectangular plate.

The stopper 34L has the same shape as the stopper 34R. That is, as shown on the right hand in Fig. 7, holes for allowing the tilting attachment 35R described later to serve as a pivot axis is formed on U-shaped opposing surfaces 34-1 and 34-3, and a screw insertion hole 34a is formed on a surface 34-4 that is extended so as to be approximately orthogonal to a surface 34-2 and approximately parallel with the pivot axis. A surface 34-5 extending from the surface 34-1, and a surface 34-6 extending from the surface 34-3 are bent so as to be approximately parallel with the pivot axis of a tilting attachment 35L, and recess portions 34b, 34b are formed at their end portions, serving as a receiver of the tilting attachment 35L. The surfaces 34-1 and 34-3 are also provided with long holes 34c, 34c.

The tilting attachment 35L is a relatively thick steel wire and, as shown in Figs. 6A and 7, has a short linear portion 35a held at the hole for inserting the stopper 34L, and a long linear portion 35b opposing to the short linear portion 35a. Opposite ends of the linear portions 35a and 35b are connected by a linear part and a crank part, respectively. A torsion coil spring is incorporated into the short linear portion 35a, and is urged to engage with the recess portions 34b, 34b of the stopper 34L, as shown in Fig. 7.

Likewise, the first lever 32R, second lever 33R, stopper 34R, tilting attachment 35R, and bearing 36R are arranged on the emboss processed section 31R. Hereat, the second lever 33R, stopper 34R and bearing 36R are fabricated in the same shape as the above-mentioned second lever 33L, stopper 34L and bearing 36L. The first lever 32R and tilting attachment 35R are fabricated in a symmetrical shape with respect to the first lever 32L and tilting attachment 35L, respectively.

In the plate unit 30 so constructed as mentioned above, as shown in Fig. 8, one end of the second lever 33 is pivotally disposed at the first lever 32 via the second shaft 32b, and the bearing 36 is pivotally disposed at a lower end of the first lever 32 via the third shaft 32c. The other end of the second lever 33 is pivotally disposed at the bearing 31a disposed on the base plate 31 via the first shaft 31b. When a tilt angle at which the screen 2 of the display unit 1 is approximately parallel with the wall 100 is approximately 0°, as shown in Fig. 7, a screw is inserted into the overlapped hole 32f of the first lever 32 and the hole 33a of the second lever 33, and then screwed and fixed to the screw hole 31b-1 drilled in the base plate 31. Further, a screw is passed through the long hole 36a of the bearing 36 to the lowermost screw hole (corresponding to the tilt angle of 0°) of the screw holes 31b-2, 31b-2, ... to fix the bearing 36. Thereby, the engaging shaft 32a of the first lever 32 is set to the position closest to the base plate 31.

The stopper 34 on which the tilting attachment 35 is attached, as shown in Fig. 7, is fixed on the base plate 31 by inserting a screw from the screw insertion hole 34a to the screw holes 31b-3 of the base plate 31. At this time, the torsion coil spring (not shown) is inserted into the tilting attachment 35. This spring usually urges the tilting attachment 35 to engage with the recess portions 34b, 34b of the stopper 34. In the foregoing description, the bearing 36 and stopper 34 are merely fixed with screws to the base plate 31, however it is not necessary to limit to this configuration and other arrangement may be employed. For example, projections may be provided at portions where the bearing 36 and the stopper 34 have contact with the base plate 31, and long holes are may be formed so as to correspond to these projections on the base plate 31. Under engagement between the projections and the long holes, they may be screwed to each other so as to prevent displacement.

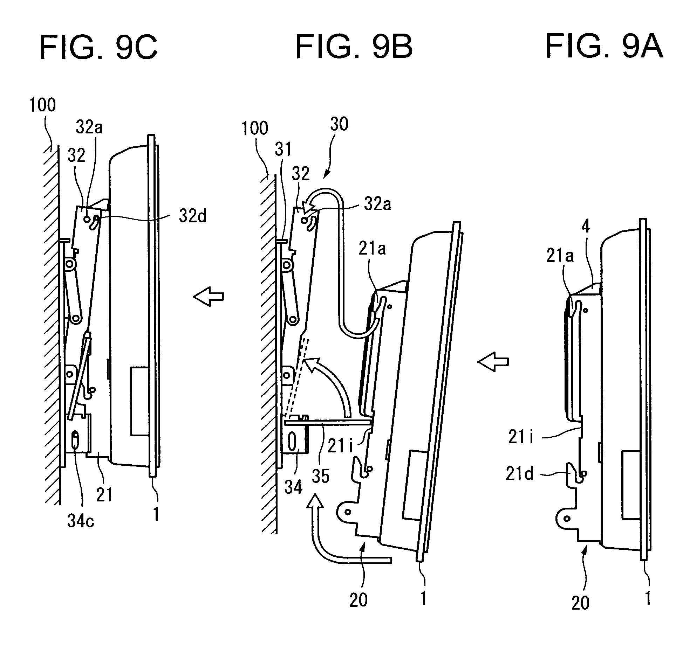

The assembly of the hook unit 20 to the plate unit 30 will next be described with reference to Fig. 1, Fig. 3, Fig. 7, and Figs. 9A to 9C. Referring to Fig. 7, first, the plate unit 30 so constructed as mentioned above is fixed to the wall 100 by inserting wood screws, or general screws if an anchor bolt has already been buried in the wall 100, into the holes 31c, 31c, ... of the base plate 31. At this time, the engaging shafts 32a, 32a of the first levers 32L and 32R have to be kept approximately parallel to each other. Referring to Fig. 9A, the display unit 1 with the hook unit 20 fixed to the rear cover 3 '(see Fig. 3) is held in approximately parallel with the wall 100. Referring to Fig. 1 and Fig. 9B, the display unit 1 is brought close to the plate unit 30, while holding the recess portion 21i provided at the edge 21-1 of the bracket 21 of the hook unit 20 (see Fig. 4C) so as to oppose to the tilting attachment 35.

Referring to Fig. 9B, the recess portion 21i is brought into contact with the tilting attachment 35. Thereafter, as indicated by the arrows, the display unit 1 is lifted in such a manner that the tilting attachment 35 is pushed up by the recess portion 21i. Referring to Fig. 9C, the hook 21a of the hook unit 20 is hung on the engaging shaft 32a of the plate unit 30, thereby hanging the display unit 1 (see Fig. 1). Finally, in the state shown in Fig. 9C, a screw (not shown) is inserted and screwed into the arcuately shaped long hole 32d of the first lever 32 and the screw hole 21f near the hook 21a on the upper part of the bracket 21, and further a screw (not shown) is inserted and screwed into the long hole 34c disposed at the stopper 34 and the screw hole 21j at the projection 21h on the lower part of the bracket 21. Thereby, the hook unit 20 and the plate unit 30 can be connected firmly, so that the display unit 1 is integrally fixed to the wall 100 without rattle.

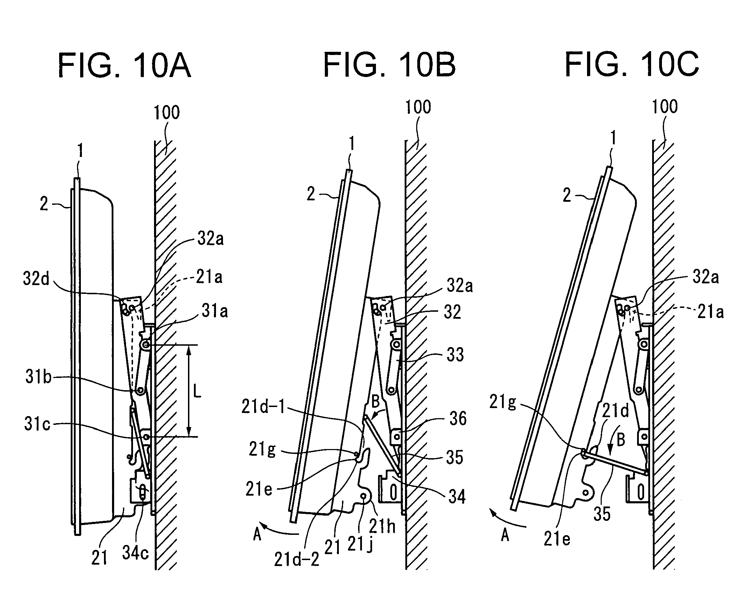

The wall mounting support so constructed as mentioned above will be described with reference to Figs. 10A to 10C. Fig. 10A illustrates the state in which the display unit 1 is fixed in approximately parallel with the wall 100 (see Fig. 9C). First, in the state of Fig. 10A, the screw inserted into the long hole 34c, which connects the hook unit 20 and the plate unit 30 at a lower part of the wall mounting support, is removed for releasing fixation. At this time, the screw inserted into the arcuately shaped long hole 32d is slightly loosen. As a result, the display unit 1 can be hung so as to be able to pivot at the engaging shaft 32a of the first lever 32 of the plate unit 30.

Referring to Fig. 10B, the lower end of the display unit 1 is held and lifted so as to depart from the wall 100 in the direction indicated by the arrow A. At this time, the tilting attachment 35 is urged in the direction indicated by the arrow B in Fig. 10B. Subsequently, the lower end of the display unit 1 is further lifted from the state shown in Fig. 10B to the direction indicated by the arrow A in Fig. 10C, so that the tilting attachment 35 is hooked in the opening 21d-1 of the lock claw 21d of the bracket 21 in the hook unit 20. Finally, the holding of the lower end of the display unit 1 is released. As a result, as shown in Fig. 10C, under the weight of the display unit 1, the tilting attachment 35 slides from the lower end 21d-2 of the opening of the lock claw 21d, while being urged under spring urging force, to engage with the engaging recess portion 21e that is formed to cut into the edge 21-1 of the bracket 21.

In the state of Fig. 10C, the tilting attachment 35 is urged by the spring incorporated into the stopper 34 in the direction indicated by the arrow B, and the engaging recess portion 21e is abutted to engage with the tilting attachment 35 under the weight of the display unit 1. Accordingly, there is little possibility that the tilting attachment 35 is disengaged from the state in Fig. 10C. Therefore, ensuring a sufficient space against the wall 100 below the rear cover 3 of the display unit 1 shown in Fig. 10C can be safely performed even by a user. This also enables safe and easy cable connection operation for adding external equipment to the connection terminal disposed on the rear cover 3. When the display unit 1 is maintained in the state shown in Fig. 10C for a long period of time, as needed, a screw is screwed into the hole 21g near the lock claw 21d, and the head of the screw narrows the opening 21d-1, thereby preventing the tilting attachment 35 from slipping off.

After connecting the cable, the display unit 1 is slightly lifted in the direction indicated by the arrow A in Fig. 10C, so that the tilting attachment 35 is released from the engagement with the engaging recess portion 21e. The user lifts the tilting attachment 35 to above the opening 21d-1 of the lock claw 21d, and releases his/her hold. As a result, the display unit 1 returns to the state in Fig. 10A under its own weight. Thus, a sequence of operations for engaging the tilting attachment 35, as shown in Figs. 10A to 10C, can be safely performed by one action of holding and lifting the display unit 1 in the direction indicated by the arrow A. As needed, a screw is finally screwed into the long hole 34c for fixation.

As in the case of Figs. 10A to 10C, when the bearing 36 of the plate unit 30 is constructed so that the display unit 1 is approximately parallel with the wall 100, only one operation of pivoting the display unit 1 is needed to provide therebelow a sufficient space against the wall 100. Therefore, the user can solely and safely connect the cable to the connecting terminal on the rear cover 3 of the display unit 1.

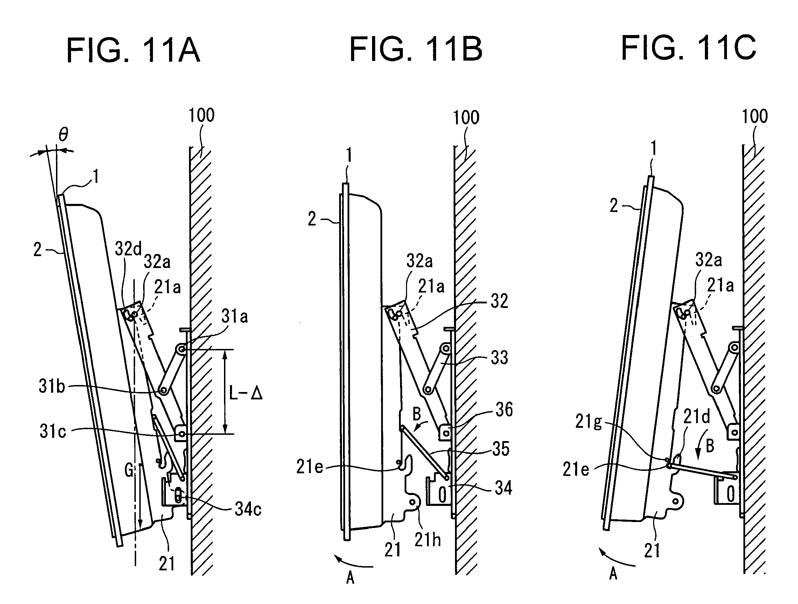

A tilt fixing function of the display unit by the wall mounting support in this embodiment will next be described with reference to Figs. 11A to 11C. Compared to the case where the length between the first shaft 31b and the third shaft 32c is L (see Fig. 10A) when the display unit 1 is approximately parallel with the wall 100, as shown in Figs. 10A to 10C, the plate unit 30 of the wall mounting support shown in Figs. 11A to 11C has a length of L-Δ, which is obtained by reducing in the amount of a length Δ.

Referring to Fig. 8, first, in the state in which the plate unit 30 is fixed to the wall 100 without hanging the display unit 1, the bearing 36 of the first lever 32 is lifted in the direction indicated by the arrow A, and the screw, which has been inserted for fixing at the lowermost one of the screw holes 36b-2, 36b-2, ..., of the base plate 31 in the foregoing example, is inserted into the screw hole 36b-2 at a higher position corresponding to a predetermined tilt angle of the display screen 2. As a result, the engaging shaft 32a at the upper end of the first lever 32 is pivoted and disposed so as to depart from the base plate 31 in the direction indicated by the arrow B shown in Fig. 8.

In the same manner as in the foregoing example in Figs. 10A to 10C, the hook 21a of the hook unit 20 fixed to the rear cover 3 of the display unit 1 is hung on the engaging shaft 32a of the plate unit 30, thereby hanging the display unit 1 (see Fig. 11A). Here, in the display unit 1 with the hook unit 20 fixed to the rear cover 30, the center of gravity G of the whole is located toward beneath the rear cover 3 of the display unit 1, as shown in Fig. 11A. Hence, the tilt state of the display unit 1 is stable, and the lower end of the display unit 1 is relatively close to the wall 100, and it naturally make a tilt angle θ (the tilt of the screen). When the length L-Δ in Fig. 11A is small, with the display unit 1 hung, as shown in Fig. 11A, the projection 21h on the lower part of the bracket 21 of the hook unit 20 is brought into contact with the surface 31-1 of the base plate 31, thereby preventing a large pivot action of the display unit 1.

Subsequently, a screw is inserted into the arcuately shaped long hole 32d formed at the upper end of the first lever 32 of the plate unit 30 and the screw hole 21f near the hook 21a on the upper part of the bracket 21 of the hook unit 20, and further a screw is inserted into the long hole 34c formed at the stopper 34 of the plate unit 30 and the screw hole 21j formed at the projection 21h on the lower part of the bracket 21 of the hook unit 20. Thereby, the hook unit 20 and the plate unit 30 can be connected firmly, so that the display unit 1 is integrally fixed to the wall 100 without rattle.

Thus, the engaging shaft 32a at the tip of the first lever 31 can be departed from the base plate 31 by changing the mounting height of the bearing 36, and decreasing the length between the first shaft 31b and the third shaft 32c, as shown in Fig. 11A, by the amount of the length Δ than the length L shown in Fig. 10A. In this state, by fixing the hook unit 20 and the plate unit 30 at a lower part of the wall mounting support, the tilt angle θ of the display unit 1 can be set to a large value.

Additionally, it is possible to make a cable connection to the external connecting terminal at the lower part of the rear cover 3 of the display unit 1 that is set so as to have the tilt angle θ, in the same manner as in the foregoing example in Figs. 10A to 10C. Referring to Fig. 11A, first, the screw inserted into the long hole 34c, which connects the hook unit 20 and the plate unit 30 at a lower part of the wall mounting support, is removed for releasing fixation, so that the display unit 1 is hung so as to be able to pivot. Next, the lower end of the display unit 1 is held and pivoted so as to depart from the wall 100 in the direction indicated by the arrow A in Fig. 11B. Subsequently, the lower end of the display unit 1 is further pivoted in the direction indicated by the arrow A in Fig. 10C, so that the tilting attachment 35 is fit in the opening 21d-1 of the lock claw 21d of the bracket 21 in the hook unit 20. Finally, the holding of the lower end of the display unit 1 is released, and the tilting attachment 35 is brought into engagement with the engaging recess portion 21e (Fig. 11C). In the state of ensuring a sufficient space between the rear cover 3 of the display unit 1 and the wall 100, the cable connection to external equipment can be performed safely.

As in the case in Figs. 11A to 11C, the tilt angle made between the display unit 1 and the wall 100 can be changed easily by changing the mounting height of the bearing 36 of the plate unit 30. In addition, a sufficient space against the wall 100 is ensured by pivoting the display unit 1.

In accordance with the above wall mounting support for a display unit, the user can perform solely and safely the cable connection to external equipment, even after mounting the display unit 1 to the wall 100. Moreover, it is easy to set the display unit 1 to approximately parallel with the wall or to set its angle of view so as to have a tilt angle.

While it has been described that the tilting attachment 35 is combined with the stopper 34 on the base plate 31 side, it is easy to understand that the similar operational effect as in the foregoing example may be obtainable by disposing the tilting attachment 35 on the hook unit 20 side and the lock part engaged thereto on the base plate side.

Although the foregoing example has described that the tilting attachment 35 is disposed so as to stand against the base plate 31 by the torsion coil spring incorporated in the stopper 34, instead of the torsion coil spring, other elastic body may be used for urging. Alternatively, no urging means may be incorporated because the tilting attachment 35 is pivoted and locked in drop fashion under the weight of itself. While the engagement between the tilting attachment 35 and the hook unit 20 has been described in the case where the tilting attachment 35 drops into the opening 21d-1 of the lock claw 21d, any other arrangement may be employed without limiting to this. For example, a long hole and a lock member may be disposed on the side surface 21-2 of the bracket 21 of the hook unit 20, and a hook-shaped tip of the tilting attachment 35 may be inserted in this long hole and the lock member locks to prevent it from slipping off. A variety of modifications can be employed for the tilting attachment and its lock structure.

Embodiments provide a wall mounting support for a display unit includes: a hook unit fixed to a rear of a display unit, having two sets of hooks and engaging sections, disposed on right and left sides of the hook unit, respectively; and a plate unit fixed to a wall, having two sets of engaging shafts engaging with the hooks and tilting attachments engaging with the engaging sections, disposed on right and left sides of the plate unit, respectively; wherein the hook on the rear of the display unit is pivotally hung on the engaging shaft of the plate unit, and the tilting attachment is provided so as to have a predetermined space between the wall and a lower part of the rear of the display unit when the tilting attachment engages with the engaging section.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention

## Claims

1. A wall mounting support for a display unit, comprising:
a hook unit fixed to a rear of a display unit, having two sets of hooks and engaging sections, disposed on right and left sides of the hook unit, respectively; and
a plate unit fixed to a wall, having two sets of engaging shafts engaging with the hooks and tilting attachments engaging with the engaging sections, disposed on right and left sides of the plate unit, respectively;
wherein the hook on the rear of the display unit is pivotally hung on the engaging shaft of the plate unit, and the tilting attachment is provided so as to have a predetermined space between the wall and a lower part of the rear of the display unit when the tilting attachment engages with the engaging section.

2. The wall mounting support for a display unit according to claim 1,
wherein the plate unit comprises:
a base plate;
a first shaft provided on the base plate;
a first lever having the engaging shaft at one end, a second shaft at the approximately central portion, and a third shaft at the other end; and
a second lever having one end pivotally engaging with the first shaft and the other end pivotally engaging with the second shaft;
wherein an attaching position of the third shaft of the first lever to the base plate is changeable.

3. A wall mounting support for a display unit, comprising:
a hook unit fixed to a rear of a display unit, having two sets of hooks and tilting attachments, disposed on right and left sides of the hook unit, respectively; and
a plate unit fixed to a wall, having two sets of engaging shafts engaging with the hooks and engaging sections engaging with the tilting attachments, disposed on right and left sides of the plate unit, respectively;
wherein the hook on the rear of the display unit is pivotally hung on the engaging shaft of the plate unit, and the tilting attachment is provided so as to have a predetermined space between the wall and a lower part of the rear of the display unit when the tilting attachment engages with the engaging section.

4. The wall mounting support for a display unit according to claim 3,
wherein the plate unit comprises:
a base plate;
a first shaft provided on the base plate;
a first lever having the engaging shaft at one end, a second shaft at the approximately central portion, and a third shaft at the other end; and
a second lever having one end pivotally engaging with the first shaft and the other end pivotally engaging with the second shaft;
wherein an attaching position of the third shaft of the first lever to the base plate is changeable.
